# EUROPEAN PATENT SPECIFICATION

(11) **EP 3 165 617 B1**
(45) Date of publication and mention of the grant of the patent: **03.07.2019**
(21) Application number: 15290284.7
(22) Date of filing: 09.11.2015
(51) Int. Cl.: C22B 7/00

(54) **METHOD OF RECYCLING RUBBER-METAL-COMPOSITE PARTS**
VERFAHREN ZUR WIEDERVERWERTUNG VON GUMMI-METALL-VERBUNDSTOFFTEILEN
PROCÉDÉ DE RECYCLAGE DE PIÈCES COMPOSITE MÉTAL ET CAOUTCHOUC

(43) Date of publication of application: 10.05.2017
(73) Proprietor: Contitech France SNC, 92631 Gennevilliers Cedex (FR)
(72) Inventor: Milz, Volker, 21149 Hamburg (DE); Racine, Jerome, 95170 Gennevilliers (FR); Dorner, Andreas, 21077 Hamburg (DE); Vier, Ludovic, 95580 Andilly (FR)
(74) Representative: Kilsch, Armin Ralph

(56) References cited:
- EP-A2- 0 451 323
- JP-A- H1 176 978
- MYHRE M ET AL: "RUBBER RECYCLING", RUBBER CHEMISTRY AND TECHNOLOGY, AMERICAN CHEMICAL SOCIETY, RUBBER DIVISION, US, vol. 75, no. 3, 1 July 2002 (2002-07-01), pages 429-474, XP001145217, ISSN: 0035-9475

## Description

The invention is related to a method of recycling rubber-metal-composite parts, in particular rubber-metal springs for railway application, where used rubber-metal-composite parts are subjected to pyrolising heat treatment in a controlled atmosphere in a heating chamber.

Rubber-metal-composite parts, for instance heavy load rubber-metal springs for railway application, rubber-metal bearings, rubber-metal-bushings etc. are designed for long service and have to provide for most comfortable suspension applications throughout a long time life period.

In these parts the rubber generally is vulcanized to metallic inserts or armatures. Facing these heavy load applications the metal inserts and armatures are subjected to, it is indispensable to provide maximum metallurgical and physical properties of the metallic parts throughout their lifetime. Therefore physical properties as tensile strength, yield point, elongation factor, impact energy, hardness etc. are checked thoroughly and have to be guaranteed.

The assembly of rubber-metal springs e.g. into a railway suspension requires small tolerances of their metal parts in particular, also exact adherence to geometrical restrictions and the avoidance of any deformation or shape fault.

Most of those metallic inserts in rubber-metal-composite parts, due to their load bearing capacity, are made of high strength steel, of casted iron or of forged metal. Thinking in terms of cost the monetary value of materials and processing of metal inserts in a rubber-metal-composite part as such are noticeable higher than the value of the vulcanized rubber parts. Also the weight and the volume of the metal inserts are higher than the ones of the rubber parts.

Another important aspect for the supply of rubber-metal-composite parts is the management of logistic constraints in manufacturing processes and supply chains. As a matter of fact the amount of rubber-metal-composite parts for the equipage of a railcar or a train generally is not very suitable and sufficient for manufacture in an economic scale. Request of minimum quantities do not allow production in commercial batches, creating needs for significant stockpiling and provision of complex transport facilities. These problems increase if it comes to aftersale, train refurbishment and replacement of aged parts.

Nevertheless a railcar or train could not wait for months until being replaced into service. The costs for "out of service" are without any comparison to the costs of rubber-metal-composite parts, so that maintenance needs and costs are hard to predict and difficult to handle.

Of course an approach has been made to solve this problem by recycling rubber-metal-composite parts through reprocessing or remanufacturing. As mechanical fractionizing is nearly impossible and definitely leads to at least partial deterioration of the metal inserts too, the only way disclosed in the state of the art was burning the rubber and its reduction to ashes in a process of complete nearly stoichiometrical combustion.

A significant drawback of said process of burning the rubber is the impact of high burning temperature to the metallurgical properties of the metal inserts. Depending on the height of temperature and the metallic type, pre-treatment and structure, the suspension to high temperature can cause soft annealing, hardening or other alterations of the metallurgical formation / grain structure and may turn the insert unfeasible after recycling. In this respect even conventional pyrolising heat treatments turned out to fail. Current pyrolising treatment for instance used for waste processing are altering metallic components because of high temperatures during the process, pyrolising of hydrocarbon such as industrial waste processing or tin waste processing may reach up to 700° C.

JP H 11 76978 A discloses a method where waste composite material consisting of metals and rubber is treated with superheated steam and where the organic gas generated by thermal decomposition is completely burned.

EP 0 451 323 A2 discloses the use of methane and combustible gases to raise or maintain the temperature for pyrolysis in an airtight reactor and in the absence of oxygen for completely burning the remaining gases.

Academic publication "Rubber Recycling", Marvin Myhre et al., Rubber Chemistry and Technology, American Chemical Society, Rubber Division, US, vol. 75, no. 3, 1.July 2002 (2002-07-01), pages 429-474, XP00145217, ISSN: 0035-9475 teaches different treatments for recycling of vulcanized rubber by means of pyrolysis in the absence of oxygen.

JP H11 76978 A discloses a combustion treatment of carbonic gases that originate from superheated steam treatment of rubber consisting waste.

It therefore was an object of the invention to provide a method for recycling rubber-metal-composite parts, in particular rubber-metal springs for railway application, which leads to a feasible recycled insert to be reused in a second life cycle after being reassembled and revulcanised with the appropriate rubber parts. Another object of the invention was to provide a method which does not affect mechanical and metallurgical properties of the inserts and which allows to overcome the economical drawbacks of producing rubber-metal-composite parts for aftersale, train refurbishment and replacement of aged parts.

These objects are achieved by operating the pyrolising heat treatment at a temperature between 400 and 450° C and in a gaseous atmosphere (4) containing an oxygen content of less than 2% by volume in the chamber, wherein the heat treatment is performed until the rubber components of the rubber-metal-composite parts are pyrolised, wherein after pyrolising heat treatment the remaining carbonic components are supposed to combustion under addition of less than 10% by volume of oxygen to burn the carbon black deposits (9) remaining from the pyrolised rubber and transform it into ashes.

Using this controlled of temperature range and oxygen content any impact on mechanical and metallurgical properties of the inserts is prevented and said inserts can be used offhand for the manufacture of new, i.e. recycled rubber-metal-composite parts by vulcanizing the appropriate rubber parts to the inserts. With this method more or less any used insert can be prepared for another reuse.

The pyrolise heat treatment is operated at a temperature between 400 and 450° C. This temperature is most feasible for rubber-metal-composite parts where the inserts are made of casted iron or of forged metal.

In the absence of oxygen, i.e. at an oxygen content of less than 2 % (volume) in the gaseous atmosphere the molecules of the organic material are transformed/broken into more elementary organic molecules, wherein the general chemical reaction roughly may be described as follows:

(C, H, O, N, H₂, O, inert material) → (C, inert material) + (CO, H₂, CH₄, Cn Hn, N₂, H₂O)

As can be seen, these chemical reactions mainly generate organic gases/pyrolyse gases i.e. CO, H₂, CH₄, Cn Hn, N₂, H₂O and a minor proportion of carbon black, i.e. coke and comparable C-material. As the process of heat treatment is basically free from oxygen the oxidation of the metal inserts is minimized. After such pyrolysis the metal inserts may be treated by shot blasting/sand blasting for achieving the desired surface condition for a new step of vulcanizing.

The remaining carbonic components are submitted to combustion under addition of a less than 10% (volume) of oxygen after pyrolising heat treatment, so most of all carbon black deposits remaining from the pyrolised rubber are transformed into ashes. This gasification reduces the amount of additional treatment of the metal inserts and reduce the waste.

According to another aspect of the invention it is preferable to conduct the pyrolise heat treatment for at least 8 hours. This leads to a complete pyrolysis of the rubber while the metal properties are not affected.

According to a further aspect of the invention it is preferable to control the operating temperature by sensors placed nearby the metallic structures of the rubber-metal-composite parts. Such control helps to avoid overheating of the chamber's atmosphere

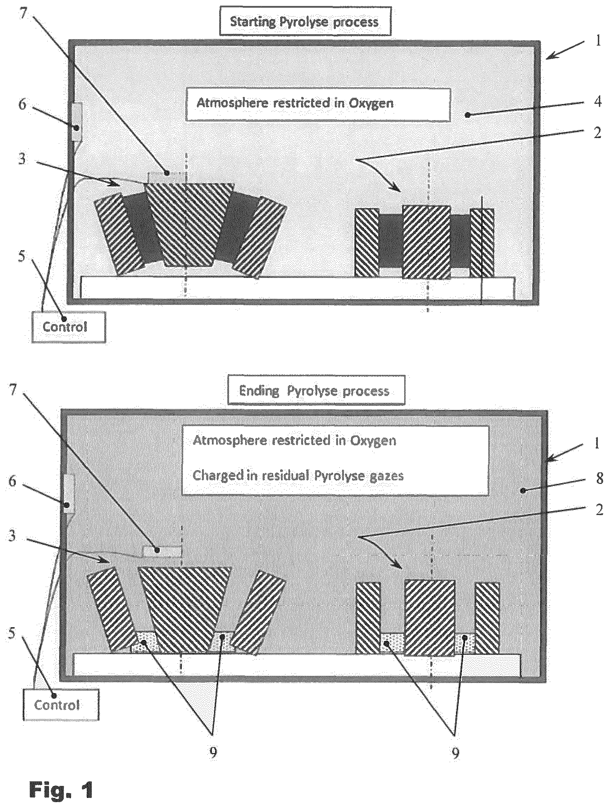

Figure 1 shows a preferred embodiment of a heating chamber 1 in which the method according to the invention can be executed.

In the upper part of Fig. 1 the heating chamber 1 is shown after being charged with two rubber-metal-composite parts 2 and 3, i.e. two rubber-metal springs for a railcar's suspension. Chamber 1 is filled with gaseous atmosphere containing an oxygen content of less than 2% of volume.

A control unit 5 which controls the temperature of the composite parts and the inner chamber's atmosphere responds to temperature sensors 6 and 7 inside of the chamber. The control unit operates a heating unit and/or a heat exchanger that keep the temperature of the inner chamber's atmosphere and the temperature of the rubber-metal-composite parts constantly at 420°C for ten hours.

After this period of ten hours the pyrolising heat treatment has come to an end while the rubber components of the rubber-metal-composite parts are completely pyrolised.

As shown in the lower part of Fig. 1 the heating chamber 1 is then filled with a gaseous atmosphere 8 containing a slightly increased but still low percentage of less than 10% (volume) of oxygen to burn the carbon black deposits 9 remaining from the pyrolised rubber and transform it into ashes by further combustion. This restriction of oxidation also limits possible rust on metal inserts.

After this additional restricted combustion the metal inserts are removed from the heating chamber and are subjected to shot blasting to remove any particles from the surface which could affect a new vulcanizing process.

## Claims

1. A method of recycling rubber-metal-composite parts, in particular rubber-metal springs for railway application, where used rubber-metal-composite parts (2, 3) are subjected to pyrolising controlled atmosphere heat treatment in a heating chamber (1), **characterized in that** the pyrolise heat treatment is operated at a temperature between 400 and 450° C and in a gaseous atmosphere (4) containing an oxygen content of less than 2% by volume in the chamber, wherein the heat treatment is performed until the rubber components of the rubber-metal-composite parts are pyrolised, wherein after pyrolising heat treatment the remaining carbonic components are supposed to combustion under addition of less than 10% by volume of oxygen to burn the carbon black deposits (9) remaining from the pyrolised rubber and transform it into ashes.

2. A method as defined in claim 1 or 1, wherein the pyrolise heat treatment is conducted for at least 8 hours.

3. A method as defined in one of the preceding claims, wherein the operating temperature is controlled by sensors (6, 7) placed nearby the metallic structures of the rubber-metal-composite parts.

## Patentansprüche

1. Verfahren zur Wiederverwertung von Gummi-Metall-Verbundteilen, insbesondere Gummi-Metall-Federn für das Eisenbahnwesen, bei dem gebrauchte Gummi-Metall-Verbundteile (2, 3) einer pyrolysierenden Wärmebehandlung in kontrollierter Atmosphäre in einer Heizkammer (1) unterworfen werden, **dadurch gekennzeichnet, dass** die pyrolysierende Wärmebehandlung bei einer Temperatur zwischen 400 und 450 °C und in einer gasförmigen Atmosphäre (4) mit einem Sauerstoffgehalt von weniger als 2 Vol.-% in der Kammer betrieben wird, wobei die Wärmebehandlung durchgeführt wird, bis die Gummikomponenten der Gummi-Metall-Verbundteile pyrolysiert sind, wobei die verbliebenen kohlenstoffhaltigen Komponenten nach der pyrolysierenden Wärmebehandlung einer Verbrennung unter Zugabe von weniger als 10 Vol.-% Sauerstoff unterworfen werden, um die von dem pyrolysierten Kautschuk verbliebenen Rußablagerungen (9) zu verbrennen und sie in Asche umzuwandeln.

2. Verfahren nach Anspruch 1 oder 1, wobei die pyrolysierende Wärmebehandlung mindestens 8 Stunden durchgeführt wird.

3. Verfahren nach einem der vorhergehenden Ansprüche, wobei die Betriebstemperatur durch in der Nähe der Metallkonstruktionen der Kautschuk-Metall-Verbundteile angeordnete Sensoren (6,7) gesteuert wird.

## Revendications

1. Procédé de recyclage de pièces composites en caoutchouc-métal, en particulier de ressorts en caoutchouc-métal pour une application dans les chemins de fer, dans lequel des pièces composites en caoutchouc-métal utilisées (2, 3) sont soumises à un traitement thermique de pyrolyse dans une atmosphère contrôlée dans une chambre de chauffage (1), **caractérisé en ce que** le traitement thermique de pyrolyse est mis en oeuvre à une température comprise entre 400 et 450 °C et dans une atmosphère gazeuse (4) contenant une teneur en oxygène de moins de 2 % en volume dans la chambre, dans lequel le traitement thermique est effectué jusqu'à ce que les composants en caoutchouc des pièces composites en caoutchouc-métal soient pyrolysés, dans lequel après le traitement thermique de pyrolyse les composants carbonés restants sont soumis à une combustion avec l'ajout de moins de 10 % en volume d'oxygène pour brûler les dépôts de noir de carbone (9) restants provenant du caoutchouc pyrolysé et les transformer en cendres.

2. Procédé tel que défini dans la revendication 1 or 1, dans lequel le traitement thermique de pyrolyse est réalisé pendant au moins 8 heures.

3. Procédé tel que défini dans l'une des revendications précédentes, dans lequel la température de mise en oeuvre est régulée par des sondes (6, 7) placées à proximité des structures métalliques des pièces composites en caoutchouc-métal.
